# FASCICULE DE BREVET EUROPEEN

(11) **EP 3 674 953 B1**
(45) Date de publication et mention de la délivrance du brevet: **16.02.2022**
(21) Numéro de dépôt: 19217820.0
(22) Date de dépôt: 19.12.2019
(51) Int. Cl.: G06F 21/71, G06F 21/77

(54) **PROTECTION D'UN MICROCONTRÔLEUR**
SCHUTZ EINES MIKROKONTROLLERS
PROTECTION FOR A MICROCONTROLLER

(30) Priorité: 28.12.2018 FR 1874293
(43) Date de publication de la demande: 01.07.2020
(73) Titulaire: STMicroelectronics (Rousset) SAS, 13790 Rousset (FR); STMicroelectronics (ALPS) SAS, 38000 Grenoble (FR)
(72) Inventeur: MOISUC, Diana, 38120 Saint Egreve (FR); LAURENCIN, Christophe, 13124 Peypin (FR)
(74) Mandataire: Cabinet Beaumont

(56) Documents cités:
- US-A1- 2012 124 680
- US-A1- 2018 349 600
- Christoph Hillebold: "Compiler-Assisted Integrity against Fault Injection Attacks", , 1 décembre 2014 (2014-12-01), XP055545234, Extrait de l'Internet: URL:http://diglib.tugraz.at/download.php?i d=576a756128aff&location=browse [extrait le 2019-01-21]

## Description

### Domaine technique

La présente description concerne de façon générale les circuits et systèmes électroniques et, plus particulièrement, une contremesure contre des attaques par injections de fautes.

### Technique antérieure

Certains circuits électroniques manipulent des données ou exécutent des algorithmes ou programmes dont on souhaite réserver l'accès à des utilisateurs ou circuits autorisés. On fait alors généralement référence à des données secrètes ou algorithmes de chiffrement utilisant des clés dites secrètes.

Pour percer les secrets de tels circuits et, par exemple, découvrir les quantités ou données secrètes manipulées, une catégorie d'attaques consiste à injecter des fautes permanentes ou temporaires dans le circuit afin de pouvoir analyser sa réaction. Il s'agit, par exemple, d'analyses par canaux cachés analysant la consommation du circuit (analyse de la consommation de type SPA - Simple Power Analysis ou DPA - Differential Power Analysis), son rayonnement électromagnétique, etc. Il peut s'agir également d'analyses de la réponse du circuit (de ses entrées-sorties), etc.

L'injection de fautes s'effectue de plus en plus souvent sans utiliser les entrées-sorties du circuit mais par modification d'états internes, par exemple à l'aide d'un laser (attaques FIB - Focused Ion Beam), par perturbation électrique ou électromagnétique, ou de façon plus intrusive en forçant certains états internes en coupant ou détournant des chemins électriques de façon physique. Certaines de ces attaques font appel à des traitements préalables d'élimination de couches (attaques face arrière) ou de réalisation de fenêtres pour accéder aux couches actives.

Dans des circuits électroniques, par exemple des microcontrôleurs, dits sécurisés, le circuit est équipé de mécanismes pour contrer d'éventuelles attaques ou, à tout le moins en limiter les effets. En particulier, l'objectif des contremesures est d'empêcher que le pirate ne parvienne à extraire les données ou quantités secrètes du circuit protégé.

Une catégorie de contremesures à laquelle s'applique plus particulièrement les modes de réalisation décrits concerne les contremesures qui réinitialisent (reset) le circuit lorsqu'une tentative d'attaque est détectée. Une telle réinitialisation évite que l'attaquant ne puisse extraire des informations sensibles. Toutefois, une difficulté est qu'en rejouant l'attaque plusieurs fois de façon localisée, l'attaquant est susceptible d'identifier la zone du microcontrôleur où se trouvent les circuits provoquant la réinitialisation et/ou les conducteurs véhiculant les signaux de réinitialisation. Une fois cette identification effectuée, l'attaquant peut être en mesure de déjouer la réinitialisation et le microcontrôleur n'est alors plus sécurisé. La thèse "Compiler-Assisted Integrity against

Fault Injection Attacks" soumise par Erich Wenger à l'Université de technologie de Graz, donne un aperçu des contre-mesures contre les attaques par injection de fautes.

### Résumé de l'invention

Il existe un besoin d'amélioration des contremesures contres des attaques par injection de fautes.

Un mode de réalisation prévoit un procédé et un circuit de protection contre des attaques par injection de fautes palliant tout ou partie des inconvénients des solutions connues.

Un mode de réalisation prévoit un procédé de protection d'un circuit électronique, comprenant les étapes de :
détecter un dysfonctionnement ;
en cas de détection de dysfonctionnement, exécuter plusieurs vagues de contremesures sans interrompre le fonctionnement du circuit, l'intervalle entre deux vagues de contremesures étant variable ; et
à l'issue de ces vagues de contremesures, provoquer une réinitialisation du circuit dans lequel un premier groupe de vagues ne comporte pas d'interruption non masquable.

Un mode de réalisation prévoit un microcontrôleur comportant :
au moins un détecteur d'un dysfonctionnement ;
un circuit de traitement de signaux fournis par le ou les détecteurs, destiné à exécuter plusieurs vagues de contremesures sans interrompre le fonctionnement du circuit, en cas de détection de dysfonctionnement, l'intervalle entre deux vagues de contremesures étant variable ; et
un circuit destiné à provoquer une réinitialisation du microcontrôleur à l'issue de ces vagues de contremesures, dans lequel un premier groupe de vague ne comporte pas d'interruption non masquable.

Selon un mode de réalisation, le premier groupe comporte :
un blocage d'écriture dans une mémoire ;
un blocage de tout ou partie des sorties du circuit ;
une régénération de clés cryptographiques.

Selon un mode de réalisation, un deuxième groupe de vagues de contremesures comporte une ou plusieurs interruptions non masquables.

Selon un mode de réalisation, l'intervalle variable est aléatoire.

Selon un mode de réalisation, le nombre de vagues de contremesure varie d'une exécution à une autre.

Selon un mode de réalisation, le nombre de contremesures par vague varie d'une exécution à une autre.

Selon un mode de réalisation, les vagues de contremesures mettent en œuvres, à chaque détection d'un dysfonctionnement, les étapes successives suivantes :
blocage de toute programmation de la mémoire non volatile ;
blocage des sorties du microcontrôleur ;
attente d'une durée, de préférence aléatoire ;
génération d'une interruption non masquable du programme exécuté par le microcontrôleur ;
attente d'une durée, de préférence aléatoire ; et
en parallèle, requête de réinitialisation et requête de désactivation de l'horloge principale du microcontrôleur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple de circuit électronique du type auquel s'applique les modes de réalisation décrits ;
la figure 2 illustre, de façon très schématique et sous forme de chronogramme, un exemple de signature électromagnétique usuelle d'un microcontrôleur sécurisé lors de la détection d'une attaque potentielle ;
la figure 3 représente, sous forme de blocs, un mode de mise en œuvre d'un procédé de protection ; et
la figure 4 illustre, de façon très schématique et sous forme de chronogramme, par un exemple de signature en rayonnement électromagnétique d'un circuit du type de celui de la figure 1, un mode de mise en œuvre du procédé de protection décrit.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les applications ainsi que les fonctions mises en œuvre par le circuit électronique protégé n'ont pas été détaillées, les mécanismes de protection décrits étant compatibles avec les applications et fonctions des circuits usuels. De plus les détecteurs d'intrusions ou d'attaques n'ont pas été détaillés, les modes de réalisation décrits intervenant sur les contremesures et étant compatible avec tout détecteur usuel.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

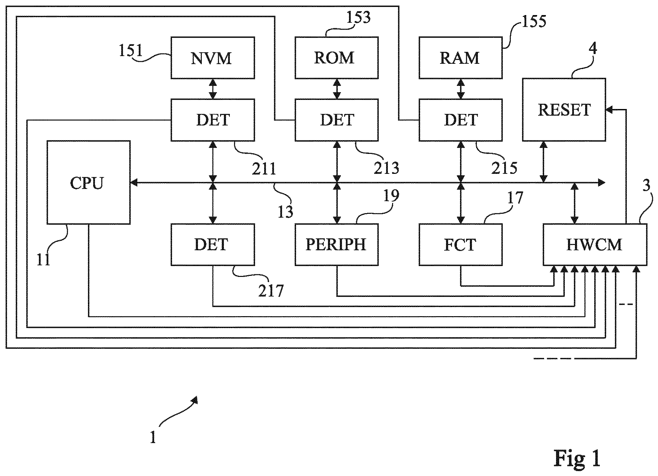

La figure 1 représente un exemple de circuit électronique du type auquel s'applique les modes de réalisation décrits.

Le circuit de la figure 1 est par exemple un microcontrôleur sécurisé 1.

Un tel microcontrôleur est basé sur un microprocesseur ou unité centrale 11 (CPU), susceptible de communiquer, par l'intermédiaire d'un ou plusieurs bus 13, avec différents autres circuits avec lesquels il est intégré. Pour simplifier, un bus 13 a été représenté en figure 1, mais il s'agit le plus souvent de plusieurs bus, respectivement d'adresses, de données et de commandes. En outre, certains composants du microcontrôleur peuvent également communiquer directement entre eux.

Typiquement, le microcontrôleur 1 intègre des circuits mémoires, par exemple une ou plusieurs mémoires non volatiles réinscriptibles 151 (NVM), une ou plusieurs mémoires à lecture seulement 153 (ROM), une ou plusieurs mémoires volatiles 155 (RAM). Le microcontrôleur peut également intégrer diverses fonctions matérielles ou circuits, symbolisés par un bloc 17 (FCT), par exemple une fonction cryptographique, des fonctions de calcul spécifiques, des interfaces d'entrée-sortie filaires et/ou sans fil, etc.

Selon l'application, le microcontrôleur 1 communique également, par le ou les bus 13, avec un ou plusieurs périphériques internes ou externes, symbolisés par un bloc 19 (PERIPH), par exemple, des détecteurs de caractéristiques environnementales (pression, température, etc.) ou autres.

Dans une application à un microcontrôleur sécurisé, celui-ci doit s'assurer qu'il soit toujours dans un état sécurisé, dans lequel des secrets contenus dans le système ne sont pas divulgués. Pour ce faire, le circuit ou microcontrôleur 1 comporte divers détecteurs (DET) matériels et/ou logiciels de tentatives d'attaques de son contenu ou de détection d'un dysfonctionnement accidentel ou volontaire. De tels détecteurs peuvent prendre divers aspects. Il s'agit, par exemple, de détecteurs matériels capables de détecter une perturbation électrique ou électromagnétique après que le circuit ait subi une modification structurelle, telle que l'élimination de couches présentes en face arrière. Il peut également s'agir de détecteurs matériels d'attaques laser. Il peut encore s'agir de détecteurs logiciels capables de détecter un dysfonctionnement opérationnel de certaines fonctions du circuit. Les détecteurs peuvent ou non être associés à des fonctions spécifiques du microcontrôleur. En figure 1, on a illustré le cas où des détecteurs 211, 213 et 215 sont intercalés entre les mémoires 151, 153, 155 et le bus 13 et sont alors dédiés à la mémoire correspondante, et le cas d'un détecteur 217 indépendant d'une fonction particulière. Par ailleurs, les fonctions 17 et/ou les périphériques 19 du circuit 1 peuvent également être associés à des détecteurs (non représentés).

Tous les détecteurs de perturbations ayant pour objet de détecter une potentialité de faute sont électriquement reliés (de manière filaire) à un bloc 3 (HWCM) matériel et/ou logiciel de réaction ou de mise en place d'une contremesure à l'attaque suspectée. Le rôle du bloc 3 est, comme on le verra par la suite, d'agir sur plusieurs fonctions du circuit 1 ainsi que de déclencher une réinitialisation du circuit 1. En figure 1, on a symbolisé un circuit de réinitialisation 4 (RESET) distinct des autres circuits et fonctions. La fonction de réinitialisation peut, en variante, se trouver au niveau de l'unité centrale 11.

Le rôle de la réinitialisation est, en présence d'une alarme indicatrice d'un dysfonctionnement, qu'il soit accidentel ou volontaire (attaque), de s'assurer que le circuit 1 reste dans un état sécurisé. La réinitialisation répond à cet objectif dans la mesure où toutes les fonctions redémarrent dans leur état sécurisé d'origine. Cette réinitialisation évite que des zones sensibles du circuit ne deviennent accessibles par suite d'une attaque.

Toutefois, la réaction du système qui se traduit par une réinitialisation constitue une indication observable par l'attaquant, lui indiquant que son attaque a modifié le comportement du circuit.

En particulier, toute réaction du circuit, par exemple signature de consommation, de rayonnement, etc. qui est différente de ce qui se produit en fonctionnement normal renseigne l'attaquant. Si un attaquant identifie une réaction du circuit, cela le renseigne sur le fait que son attaque a provoqué un comportement atypique du circuit. Il peut alors effectuer une autre attaque consistant à inhiber la réaction du système. Par exemple, en identifiant la zone du circuit provoquant la réinitialisation, il peut intervenir pour en empêcher le fonctionnement. Il lui suffit ensuite de rejouer sa première attaque, le circuit n'étant plus dans un état sûr (« safe » ou « secure »). La réinitialisation d'un microcontrôleur est en outre particulièrement identifiable sur une signature en consommation ou électromagnétique.

Plus généralement, le circuit sécurisé auquel s'appliquent les modes de réalisation décrits peut être n'importe quel circuit ou système intégrant au moins un circuit de détection d'une tentative d'attaque et un circuit de réaction (contre mesure). Les modes de réalisation décrits ne modifient en effet pas les méthodes ou façons usuelles de détecter une éventuelle attaque ou perturbation. Ils concernent une contremesure une fois une attaque détectée et s'appliquent quels que soient les mécanismes de détections utilisés (photoniques, électriques, magnétique, etc. ; localisés ou répartis dans le circuit, matériels ou logiciels, etc.).

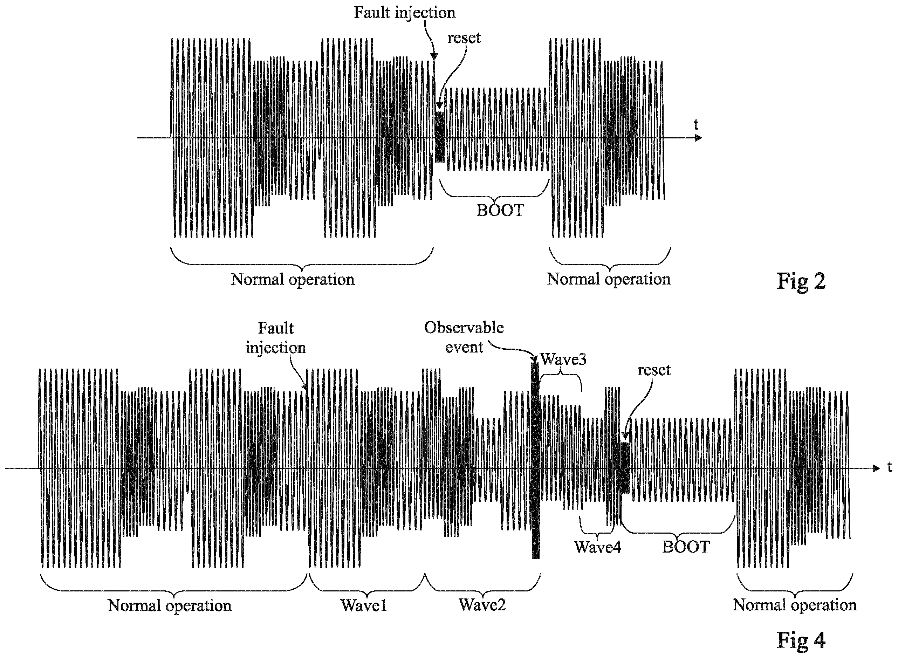

La figure 2 illustre, de façon très schématique et sous forme de chronogramme, un exemple de signature électromagnétique usuelle d'un microcontrôleur sécurisé lors de la détection d'une attaque potentielle.

On suppose un fonctionnement initial normal du microcontrôleur (Normal opération).

Lors d'une injection de faute (Fault injection), ou plus généralement d'une action ou d'un fonctionnement détecté comme anormal par l'un des détecteur DET (figure 1), le circuit 3 provoque habituellement immédiatement une réinitialisation (reset) du microcontrôleur. Ce dernier est alors redémarré (BOOT), puis le microcontrôleur reprend son fonctionnement normal (Normal operation). Le redémarrage BOOT du microcontrôleur est aisément identifiable d'autant plus qu'il est généralement de durée fixe.

Selon les modes de réalisation décrits, en cas d'attaque ou de dysfonctionnement détecté par un des détecteurs DET, le bloc 3 ne provoque pas immédiatement une réinitialisation du microcontrôleur 1. Au lieu de cela, le bloc ou circuit 3 déclenche des contremesures par vaques qui s'apparentent à un fonctionnement habituel du microcontrôleur 1. En particulier, le fonctionnement du programme en cours d'exécution par le microcontrôleur est de préférence poursuivi. Pour parfaire la protection, une réinitialisation est effectuée, mais celle-ci intervient avec retard par rapport à la détection de l'attaque et le retard est variable d'une exécution à une autre. De préférence, les contremesures qui précèdent la réinitialisation sont choisies pour néanmoins sécuriser le microcontrôleur. Toujours préférentiellement, les premières contremesures qui suivent la détection d'une attaque sont choisies pour ne pas constituer de réaction observable, mais s'apparenter à un fonctionnement normal. En empêchant une réaction immédiate par une interruption non masquable telle qu'une réinitialisation, on empêche l'attaquant de trouver la zone pertinente pour effectuer sa deuxième attaque (bloquant une réinitialisation) .

Les vagues de contremesures mises en œuvre entre la détection de l'attaque et la réinitialisation peuvent être réparties en deux catégories.

Une première catégorie concerne des contremesures non observables par l'attaquant, mais qui sécurisent néanmoins le microcontrôleur. Il s'agit, par exemple, d'un blocage de toute programmation dans la mémoire non volatile 151 ou d'un blocage des entrées-sorties du microcontrôleur. Selon un autre exemple, il s'agit de régénérer des clés servant à un processus cryptographique.

Une deuxième catégorie concerne des contremesures qui sont observables. Il s'agit, par exemple, d'interruptions non masquables (NMI - Non Maskable Interrupt) qui, contrairement aux requêtes d'interruption standard (IRQ - Interrupt Request) qui peuvent accompagner les contremesures de la première catégorie, vont être identifiées par l'attaquant. Les interruptions non masquables peuvent être suivies d'une action logicielle, par exemple, le lancement d'un programme spécifique (par exemple effaçant les clés, vidant la mémoire volatile, etc.).

Selon un mode de réalisation préféré, en cas de détection d'attaque, le circuit 3 met en œuvre une ou plusieurs vagues de contremesures de la première catégorie, suivies d'une ou plusieurs vagues de contremesures de la deuxième catégorie. Chaque vague de contremesures comporte une ou plusieurs réactions du circuit.

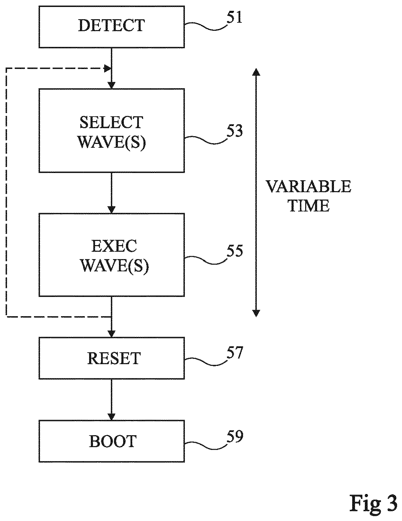

La figure 3 représente, sous forme de blocs, un mode de mise en œuvre d'un procédé de protection.

Ce procédé est mis en œuvre, par exemple, par le bloc ou fonction 3 (figure 1). Ce bloc exécute de préférence une séquence d'instructions correspondant à la mise en œuvre des différentes vagues de contremesures, à la manière d'un programme. La séquence d'instructions peut être stockée à demeure pour une exécution matérielle (logique câblée) ou être un programme stocké, par exemple, en mémoire morte.

Lors de la détection d'une attaque (bloc 51, DETECT), le circuit 3 sélectionne (bloc 53, SELECT WAVE(S)) et exécute (bloc 55, EXEC WAVE(S)) une ou plusieurs vagues de contremesures plaçant le système dans un état sûr. Il s'agit, par exemple, comme indiqué précédemment, de verrouiller certaines zones de la mémoire non volatile, de bloquer certaines entrées-sorties du microcontrôleur, de changer des clés de processus cryptographiques, etc. Ces contremesures, dites arbitrairement de première catégorie, ne génère de préférence pas d'événement observables par l'attaquant. En particulier, le fonctionnement applicatif en cours d'exécution par le microcontrôleur se poursuit et n'est pas interrompu.

Selon un mode de réalisation, une réinitialisation (bloc 57, RESET) du circuit, suivi d'un redémarrage (bloc 59, BOOT) est provoqué à l'issue de ces vagues de contremesures.

Selon un mode de réalisation préférée, le circuit 3 déclenche d'autres vagues de contremesures (boucle en pointillés en figure 3) qui peuvent comporter des interruptions non masquable. Ces contremesures se traduisent par des évènements observables par l'attaquant. Par exemple, ces contremesures restreignent graduellement les fonctionnalités du microcontrôleur. Ces contremesures, dites arbitrairement de deuxième catégorie, peuvent être entrecoupées ou mélangées à des contremesures de première catégorie, et être matérielles ou logicielles.

La figure 4 illustre, de façon très schématique et sous forme de chronogramme, par un exemple de signature en rayonnement d'un microcontrôleur du type de celui de la figure 1, un mode de mise en œuvre du procédé de protection décrit.

Le chronogramme de la figure 4 peut être comparé à celui de la figure 2 pour comprendre l'effet du mode de contremesure décrit.

Comme précédemment, on suppose un fonctionnement initial normal (Normal opération) du microcontrôleur.

Toutefois, à la détection d'une injection de faute (Fault injection), le circuit 3 ne provoque pas immédiatement de réinitialisation. Au lieu de cela, il commande un certain nombre de processus provoquant des réponses en termes de rayonnement électromagnétiques (Wave1, Wave2) qui s'apparente à une poursuite du fonctionnement normal du microcontrôleur. Ainsi, l'attaquant considère que la zone qu'il a attaquée n'était pas une zone sensible dans la mesure où il a l'impression que son attaque n'a pas entrainé de réaction. Dans l'exemple de la figure 3, on suppose deux vagues Wave1 et Wave2 de contremesures, de préférence de première catégorie. Toutefois, le nombre de contremesures et leur durée varie de préférence d'une exécution à l'autre (par exemple par une sélection aléatoire dans un ensemble de contremesures).

Selon le mode de réalisation illustré par la figure 4, le circuit 3 déclenche ensuite une interruption non masquable. Cette interruption n'est cependant pas une réinitialisation. Elle se traduit néanmoins par un évènement observable (Observable event) sur la signature électromagnétique du circuit. Selon ce mode de réalisation, cet évènement est suivi d'autres vagues de contremesures de première ou deuxième catégorie (Wave3, Wave4). Une réinitialisation (reset) du circuit intervient par exemple après ce deuxième ensemble de vagues. De façon usuelle, la réinitialisation est suivie d'un redémarrage (BOOT), puis d'une période de fonctionnement normal (Normal opération).

Un avantage du procédé illustré par les figures 3 et 4 est qu'il trompe l'attaquant sur les effets de son attaque. En effet, en faisant varier les opérations exécutées entre la détection de l'attaque et la réinitialisation, ainsi que leur durée, la réaction du microcontrôleur (son reset) est détecté à un moment où il est plus difficile de faire le lien avec l'événement ayant provoqué la contremesure. En particulier, dans le cas où la première attaque constitue un balayage de différentes zones du circuit pour le faire réagir à l'attaque, il devient difficile de localiser la zone ayant provoqué la réaction, donc la zone contenant des informations secrètes.

De préférence, l'ordre dans lequel sont exécutées les contremesures est choisi pour retarder la détection de la réaction du circuit par l'attaquant.

De préférence, la durée des vagues de contremesure est variable d'une exécution à une autre et est, par exemple, aléatoire dans une plage de durées déterminées.

A titre d'exemple de réalisation, on prévoit une durée totale comprise entre 100 ns et 1 ms entre la détection de l'attaque et la réinitialisation. Cette durée est choisie suffisamment courte pour ne pas rendre le circuit vulnérable pendant l'exécution du procédé de protection.

Selon un exemple particulier de réalisation, le procédé met successivement en œuvre les vagues de contremesure suivantes :
blocage de toute programmation de la mémoire non volatile ;
blocage des sorties du microcontrôleur ;
attente d'une durée, de préférence aléatoire ;
génération d'une interruption non masquable du programme exécuté par le microcontrôleur ;
attente d'une durée, de préférence aléatoire ; et
en parallèle, requête de réinitialisation et requête de désactivation de l'horloge principale du microcontrôleur.

Un avantage des modes de réalisation décrits est que la réaction du circuit protégé est plus difficile à détecter par un attaquant.

Un autre avantage est que le placement du circuit dans un état de protection (par suite de la détection d'une attaque) n'est pas observable sur la signature électromagnétique ou de consommation du circuit.

Un autre avantage est que, grâce aux durées aléatoires entre les contremesures, les événements observables interviennent à des instants aléatoires.

Un autre avantage est qu'une attaque ayant réussie ne peut pas être répétée sur un circuit différent de même type ou sur le même circuit, car la réaction du circuit sera différente d'un point de vue matériel et logiciel.

Un autre avantage est qu'en maintenant le fonctionnement du programme exécuté par le circuit pendant la réaction, de nombreux points où l'attaque aurait pu se révéler efficace sont considérés comme non-pertinent par l'attaquant.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Enfin, la mise en oeuvre pratique des modes de réalisation et variantes décrits est à la portée de l'homme du métier à partir des indications fonctionnelles données cidessus, en particulier, pour ce qui est du choix des réactions (contremesures) exécutées par le microcontrôleur par suite de la détection d'une attaque.

## Revendications

1. Procédé de protection d'un circuit électronique, comprenant les étapes de :
détecter un dysfonctionnement ;
en cas de détection d'un dysfonctionnement, exécuter plusieurs vagues de contremesures sans interrompre le fonctionnement du circuit, l'intervalle entre deux vagues de contremesures étant variable ; et
à l'issue de ces vagues de contremesures, provoquer une réinitialisation du circuit dans lequel un premier groupe de vagues ne comporte pas d'interruption non masquable.

2. Microcontrôleur comportant :
au moins un détecteur (211, 213, 215, 217) d'un dysfonctionnement ;
un circuit (3) de traitement de signaux fournis par le ou les détecteurs, destiné à exécuter plusieurs vagues de contremesures sans interrompre le fonctionnement du circuit en cas de détection d'un dysfonctionnement, l'intervalle entre deux vagues de contremesures étant variable ; et
un circuit (4) destiné à provoquer une réinitialisation du microcontrôleur à l'issue de ces vagues de contremesures, dans lequel un premier groupe de vagues ne comporte pas d'interruption non masquable.

3. Procédé selon la revendication 1 ou microcontrôleur selon la revendication 2, dans lequel le premier groupe comporte :
un blocage d'écriture dans une mémoire ;
un blocage de tout ou partie des sorties du circuit ;
une régénération de clés cryptographiques.

4. Procédé ou microcontrôleur selon la revendication 3, dans lequel un deuxième groupe de vagues de contremesures comporte une ou plusieurs interruptions non masquables.

5. Procédé selon l'une quelconque des revendications 1, 3 ou 4, ou microcontrôleur selon l'une quelconque des revendications 2 à 4, dans lequel l'intervalle variable est aléatoire.

6. Procédé selon l'une quelconque des revendications 1, 3 à 5, ou microcontrôleur selon l'une quelconque des revendications 2 à 5, dans lequel le nombre de vagues de contremesure varie d'une exécution à une autre.

7. Procédé selon l'une quelconque des revendications 1, 3 à 6, ou microcontrôleur selon l'une quelconque des revendications 2 à 6, dans lequel le nombre de contremesures par vague varie d'une exécution à une autre.

8. Procédé selon l'une quelconque des revendications 1, 3 à 7, ou microcontrôleur selon l'une quelconque des revendications 2 à 7, dans lequel les vagues de contremesures mettent en œuvre, à chaque détection d'un dysfonctionnement, les étapes successives suivantes :
blocage de toute programmation de la mémoire non volatile ;
blocage des sorties du microcontrôleur ;
attente d'une durée, de préférence aléatoire ;
génération d'une interruption non masquable du programme exécuté par le microcontrôleur ;
attente d'une durée, de préférence aléatoire ; et
en parallèle, requête de réinitialisation et requête de désactivation de l'horloge principale du microcontrôleur.

## Patentansprüche

1. Ein Verfahren zum Schutz einer elektronischen Schaltung, das die folgenden Schritte aufweist:
Detektieren einer Fehlfunktion;
im Falle einer Detektion einer Fehlfunktion, Ausführen einer Vielzahl von Wellen von Gegenmaßnahmen ohne Unterbrechung des Betriebs der Schaltung, wobei das Intervall zwischen zwei Wellen von Gegenmaßnahmen variabel ist; und
nach der Vielzahl von Wellen von Gegenmaßnahmen, Auslösen einer Resets der Schaltung,
wobei eine erste Gruppe von Wellen keine nicht-maskierbaren Unterbrechungen enthält.

2. Ein Mikrocontroller, der Folgendes aufweist:
mindestens einen Detektor (211, 213, 215, 217) für eine Fehlfunktion;
eine Schaltung (3) zur Verarbeitung der von dem (den) Detektor(en) gelieferten Signale, die dazu bestimmt ist, mehrere Wellen von Gegenmaßnahmen auszuführen, ohne den Betrieb der Schaltung im Falle einer Detektion einer Fehlfunktion zu unterbrechen, wobei das Intervall zwischen zwei Wellen von Gegenmaßnahmen variabel ist; und
eine Schaltung (4), die dazu bestimmt ist, einen Reset des Mikrocontrollers nach den Wellen von Gegenmaßnahmen auszulösen,
wobei eine erste Gruppe von Wellen keine nicht-maskierbaren Unterbrechungen enthält.

3. Das Verfahren nach Anspruch 1 oder der Mikrocontroller nach Anspruch 2, wobei die erste Gruppe Folgendes aufweist:
Blockieren des Schreibens in einen Speicher;
Blockieren aller oder eines Teils der Ausgänge der Schaltung;
Regenerieren von kryptographischen Schlüsseln.

4. Das Verfahren oder der Mikrocontroller nach Anspruch 3, wobei eine zweite Gruppe von Wellen von Gegenmaßnahmen einen oder mehrere nicht-maskierbare Unterbrechungen aufweist.

5. Das Verfahren nach einem der Ansprüche 1, 3 oder 4 oder der Mikrocontroller nach einem der Ansprüche 2 bis 4, wobei das variable Intervall zufällig ist.

6. das Verfahren nach einem der Ansprüche 1, 3 bis 5 oder der Mikrocontroller nach einem der Ansprüche 2 bis 5, wobei die Anzahl der Wellen von Gegenmaßnahmen von einer Ausführung zur anderen variiert.

7. Das Verfahren nach einem der Ansprüche 1, 3 bis 6 oder der Mikrocontroller nach einem der Ansprüche 2 bis 6, bei dem die Anzahl der Gegenmaßnahmen pro Welle von einer Ausführung zur anderen variiert.

8. Das Verfahren nach einem der Ansprüche 1, 3 bis 7 oder der Mikrocontroller nach einem der Ansprüche 2 bis 7, wobei die Wellen von Gegenmaßnahmen bei jeder Erkennung einer Fehlfunktion die folgenden aufeinanderfolgenden Schritte ausführen:
Blockieren jeglicher Programmierung des nicht-flüchtigen Speichers;
Blockieren der Ausgänge des Mikrocontrollers;
Warten für eine Dauer, die vorzugsweise zufällig ist
Erzeugen einer nicht-maskierbaren Unterbrechung des von dem Mikrocontroller ausgeführten Programms;
Warten für eine Dauer, die vorzugsweise zufällig ist; und
parallel dazu, Anfordern eines Reset und Anfordern der Deaktivierung des Haupttaktes des Mikrocontrollers.

## Claims

1. A method for protecting an electronic circuit, comprising the steps of:
detecting a malfunction;
in case of a detection of a malfunction, executing a plurality of waves of countermeasures without interrupting the operation of the circuit, the interval between two waves of countermeasures being variable; and
after said plurality of waves of countermeasures, triggering a reset of the circuit,
wherein a first group of waves does not include non-maskable interrupts.

2. A microcontroller including:
at least one detector (211, 213, 215, 217) of a malfunction;
a circuit (3) for processing signals supplied by the detector(s), intended to execute a plurality of waves of countermeasures without interrupting the operation of the circuit in case of a detection of a malfunction, the interval between two waves of countermeasures being variable; and
a circuit (4) intended to trigger a reset of the microcontroller after said waves of countermeasures,
wherein a first group of waves does not include non-maskable interrupts.

3. The method according to claim 1 or the microcontroller according to claim 2, wherein the first group comprises:
blocking writing in a memory;
blocking all or a part of the outputs of the circuit;
regenerating cryptographic keys.

4. The method or the microcontroller according to claim 3, wherein a second group of waves of countermeasures comprises one or more non-maskable interrupts.

5. The method according to any of claims 1, 3 or 4, or the microcontroller according to any of claims 2 to 4, wherein the variable interval is random.

6. The method according to any of claims 1, 3 to 5, or the microcontroller according to any of claims 2 to 5, wherein the number of countermeasure waves varies from one execution to another.

7. The method according to any of claims 1, 3 to 6, or the microcontroller according to any of claims 2 to 6, wherein the number of countermeasures per wave varies from one execution to another.

8. The method according to any of claims 1, 3 to 7, or the microcontroller according to any of claims 2 to 7, wherein the waves of countermeasures implement, at each detection of a malfunction, the following successive steps:
blocking any programming of the non-volatile memory;
blocking the outputs of the microcontroller;
waiting for a duration, which is preferably random;
generating a non-maskable interrupt of the program executed by the microcontroller;
waiting for a duration, which is preferably random; and
in parallel, requesting a reset and requesting the deactivation of the main clock of the microcontroller.
